# EUROPÄISCHE PATENTSCHRIFT

(11) **EP 2 666 703 B1**
(45) Veröffentlichungstag und Bekanntmachung des Hinweises auf die Patenterteilung: **22.07.2020**
(21) Anmeldenummer: 13168568.7
(22) Anmeldetag: 21.05.2013
(51) Int. Cl.: B62D 25/20, B62D 29/04, B66F 13/00, B60S 11/00

(54) **Eingriffselement für eine Kraftfahrzeugkarosserie für den Eingriff mit einer Fahrzeughebevorrichtung, Kraftfahrzeugkarosserie mit demselben und System mit Eingriffselement und Fahrzeughebevorrichtung**
Receiving element on the body of a motor vehicle for inserting a vehicle jacking device, vehicle body equipped with such an element and system with receiving element and vehicle jacking device
Elément de prise pour une carrosserie de véhicule automobile pour l'insertion d'un dispositif de levage de véhicule, carrosserie de véhicule automobile comprenant un tel élément et système avec élément de prise et dispositif de levage de véhicule

(30) Priorität: 25.05.2012 DE 102012208862
(43) Veröffentlichungstag der Anmeldung: 27.11.2013
(73) Patentinhaber: Bayerische Motoren Werke Aktiengesellschaft, 80809 München (DE)
(72) Erfinder: Hogger, Thomas, 83624 Otterfing (DE); Goldyn, Lukasz, 80807 München (DE)

(56) Entgegenhaltungen:
- DE-A1- 2 720 043
- DE-C1- 10 021 447
- JP-U- H 026 670
- US-B1- 6 361 023
- US-B1- 8 162 290

## Beschreibung

Die vorliegende Erfindung bezieht sich auf ein Eingriffselement für eine Fahrzeugkarosserie für einen Eingriff mit einer Fahrzeughebevorrichtung sowie auf eine Kraftfahrzeugkarosserie mit einem Eingriffselement für eine Fahrzeughebevorrichtung.

Bei Kraftfahrzeugen ist eine Wagenheberaufnahme als ein Eingriffselement häufig an einer unteren Wand eines seitlichen Längsträgers angebracht. Ein Wagenheber ist dabei derart ausgebildet, dass er mit der Wagenheberaufnahme eingreifen kann und das Kraftfahrzeug durch Abstützen des Wagenhebers auf einem festen Untergrund gehoben werden kann. Der Eingriff erfolgt durch Anlage des Wagenhebers an der Wagenheberaufnahme. Ein derartiges Kraftfahrzeug mit einer Wagenheberaufnahme ist z.B. in der DE 10 2007 014 824 A1 gezeigt.

Ferner ist eine Wagenheberaufnahme bekannt, bei der beispielsweise ein Wagenheberkonsolenrohr in einem Längsträger seitlich eingeschweißt ist. Das Wagenheberkonsolenrohr dient zur Aufnahme eines Eingriffselements eines Wagenhebers. Eine derartige Tragstruktur für ein Kraftfahrzeug ist in der DE 43 22 433 C1 gezeigt.

Die DE 100 21 447 C1 betrifft ein Wagenanhebesystem mit einer Aufnahmeeinrichtung, die an einem Längsträger einer Kraftfahrzeugkarosserie montiert ist. Ein Überbrückungselement ist in die Aufnahmeeinrichtung horizontal und ausschließlich linear einschiebbar und wird über Hinterschneidungen gehalten. Das Überbrückungselement dient als Angriffsfläche für einen Hebeteller einer Fahrzeug-Hubvorrichtung.

Ferner zeigt die gattungsgemäße JP H02 6670 U eine Wagenheberaufnahme, in die ein Wagenheberwerkzeug horizontal und ausschließlich linear einführbar ist. Die Wagenheberaufnahme 1 weist hierfür zwei entgegengesetzt zueinander angeordnete Nuten auf, in die entsprechende angeordnete Schienen des Wagenheberwerkzeugs einführbar sind.

Es ist die Aufgabe der vorliegenden Erfindung, ein Eingriffselement für eine Kraftfahrzeugkarosserie für einen Eingriff einer Fahrzeughebevorrichtung, das eine verbesserte Kraftübertragung in verschieden Richtungen in die Kraftfahrzeugkarosserie bei einem Heben des Kraftfahrzeugs ermöglicht, sowie eine Kraftfahrzeugkarosserie mit einem derartigen Eingriffselement für eine Fahrzeughebevorrichtung, sowie ein System mit Eingriffselement und Fahrzeughebevorrichtung zu schaffen.

Diese Aufgabe wird durch ein System aufweisend ein Eingriffselement für eine Kraftfahrzeugkarosserie und eine Fahrzeughebevorrichtung gelöst, das die Merkmale von Patentanspruch 1 aufweist.. Ferner wird diese Aufgabe durch ein Eingriffselement gemäß Patentanspruch 9, sowie durch eine Kraftfahrzeugkarosserie mit einem derartigen Eingriffselement gelöst.

Weiterbildungen des Systems und des Eingriffselements gemäß der vorliegenden Erfindung sind in den abhängigen Patentansprüchen aufgeführt.

Das Eingriffselement für eine Kraftfahrzeugkarosserie für einen Eingriff einer Fahrzeughebevorrichtung ist gemäß der vorliegenden Erfindung an einem Träger der Kraftfahrzeugkarosserie anbringbar. Das Eingriffselement weist eine Aufnahmeeinrichtung auf, durch die mittels einer formschlüssigen Verbindung in vertikaler Richtung Druckkräfte und Zugkräfte von der Fahrzeughebeeinrichtung auf die Kraftfahrzeugkarosserie übertragbar sind. Die Aufnahmeeinrichtung hat ferner einen Aufnahmevorsprung mit zumindest zwei horizontaten Eingriffsöffnungen.

Ein Träger der Kraftfahrzeugkarosserie kann dabei beispielsweise ein seitlicher Längsträger, insbesondere ein Seitenschweller, an einer unteren Seite der Kraftfahrzeugkarosserie sein. Ein Seitenschweller ist beispielsweise zwischen einem vorderen Radhaus und einem hinteren Radhaus angeordnet. Alternativ kann der Träger auch ein Querträger oder ein schräg verlaufender Träger sein. Der Träger ist ferner insbesondere im Bereich eines Bodens der Kraftfahrzeugkarosserie, d.h. einem unteren Bereich der Kraftfahrzeugkarosserie ausgebildet. Durch die Übertragbarkeit von Druck und Zugkräften in vertikaler Richtung kann zum Einen das Fahrzeug gegen seine Gewichtskraft gehoben werden, aber auch gezogen werden, insbesondere nach unten gezogen werden. Dies ist vorteilhaft, wenn das Kraftfahrzeug, z.B. gegen eine Federkraft der Radaufhängung, nach unten gezogen werden soll. Insbesondere ist eine derartige Aufnahmeeinrichtung bei einer Herstellung eines Kraftfahrzeugs vorteilhaft, so dass die Kraftfahrzeugkarosserie durch die Aufnahmeeinrichtung in mehrere Richtungen gesteuert bewegt werden kann. Durch den Formschluss können besonders einfach Kräfte in verschiedenen Richtungen von der Fahrzeughebeeinrichtung auf die Kraftfahrzeugkarosserie übertragen werden. Ein Formschluss ermöglicht zudem ein leichtes Verbinden und Lösen der Fahrzeughebeeinrichtung mit/von dem Eingriffselement bzw. der Aufnahmeeinrichtung des Eingriffselements. Durch die Ausbildung eines Aufnahmevorsprungs, der bevorzugt in vertikaler Richtung nach unten vorspringt, und einer horizontalen Eingriffsöffnung kann das Eingriffselement besonders einfach mit einem Werkzeug gegriffen werden.

Zusätzlich ist auch eine reibschlüssige Verbindung mit dem Eingriffselement bzw. der Aufnahmeeinrichtung des Eingriffselements, z.B. eine Klemmverbindung, möglich.

Der Aufnahmevorsprung hat zumindest zwei horizontale Eingriffsöffnungen. Diese Eingriffsöffnungen sind entgegengesetzt zueinander angeordnet .

Entgegengesetzt zueinander angeordnete, horizontale Eingriffsöffnungen sind auf einer Seite des Aufnahmevorsprungs und auf einer anderen Seite des Aufnahmevorsprungs vorgesehen, wobei die genannten Seiten entgegengesetzt zueinander liegen. Durch Eingriff in entgegengesetzt zueinander angeordnete horizontale Eingriffsöffnungen kann der Aufnahmevorsprung und damit das Eingriffselement besonders leicht durch ein Eingriffswerkzeug der Fahrzeughebeeinrichtung formschlüssig gegriffen werden. Dabei können von dem Eingriffswerkzeug in alle Richtungen Kräfte auf den Aufnahmevorsprung, das Eingriffselement insgesamt und damit auf die Kraftfahrzeugkarosserie ausgeübt werden.

Gemäß der vorliegenden Erfindung sind die Eingriffsöffnungen für einen drehenden Eingriff eines Eingriffswerkzeugs, das entsprechende Eingriffsvorsprünge aufweist, der Fahrzeughebevorrichtung angepasst.

Ein drehender Eingriff bedeutet, dass das Eingriffswerkzeug derart ansetzbar und drehbar ist, dass dessen Eingriffsvorsprünge mit einem Drehen des Eingriffswerkzeugs in die entgegengesetzt zueinander angeordneten horizontalen Eingriffsöffnungen eingreifen können. Hierdurch wird ein besonders sicherer Eingriff durch das Eingriffswerkzeug ermöglicht.

Gemäß einer Weiterbildung des Eingriffselements mit der Aufnahmeeinrichtung mit dem Aufnahmevorsprung mit entgegengesetzt zueinander angeordneten, horizontalen Eingriffsöffnungen sind Flanken der Eingriffsöffnungen in Abschnitten kreiszylinderförmig ausgebildet. Dabei stimmt eine Kreiszylinderachse mit einer Drehachse des Eingriffswerkzeugs, dessen Eingriffsvorsprünge entsprechende Flanken aufweist, überein.

Der Ausdruck "entsprechende Flanken" bedeutet, dass die Flanken der Eingriffsvorsprünge den Flanken der Eingriffsöffnungen zumindest teilweise entsprechen. Insbesondere können die Flanken der Eingriffsvorsprünge des Eingriffswerkzeugs ebenso in Abschnitten kreiszylinderförmig ausgebildet sein, wobei eine Kreiszylinderachse mit der Drehachse des Eingriffswerkzeugs übereinstimmt.

Hierdurch können die Eingriffsöffnungen besonders vorteilhaft durch die Eingriffsvorsprünge bei vollständigem Eingriff des Eingriffswerkzeugs ausgefüllt werden. Dies hat wiederum den Vorteil, dass eine Kraftübertragung zwischen dem Eingriffswerkzeug und dem Eingriffselement, d.h. im Aufnahmevorsprung, verbessert ist und ebenso größere Kräfte von dem Eingriffswerkzeug auf den Aufnahmevorsprung und damit auf das Eingriffselement bzw. die Fahrzeugkarosserie übertragen werden können.

Bevorzugt hat der Aufnahmevorsprung mit den entgegengesetzt zueinander angeordneten horizontalen Eingriffsöffnungen auf jeder Seite zwei Eingriffsöffnungen.

Dies verbessert ebenso eine Kraftübertragung bzw. eine Steifigkeit und Festigkeit des Aufnahmevorsprungs, da zwischen jeweils zwei Eingriffsöffnungen ein den Aufnahmevorsprung stabilisierender Steg ausgebildet ist.

Der Aufnahmevorsprung kann eine beispielsweise vertikale Zentrieröffnung aufweisen, in die ein Zentriervorsprung des Eingriffswerkzeugs eingreifbar ist, wobei der Zentriervorsprung des Eingriffswerkzeugs als Drehachse des Eingriffswerkzeugs dient. Die Zentrieröffnung kann kreiszylinderförmig oder kreiskegelförmig ausgebildet sein, wobei letzteres ein Ansetzen bzw. Einführen des Zentriervorspruchs des Eingriffswerkzeugs in die Zentrieröffnung erleichtert. Der Zentriervorsprung des Eingriffswerkzeugs kann entsprechend der Zentrieröffnung kreiszylinderförmig oder kreiskegelförmig (kreiskegelstumpfförmig) ausgebildet sein.

Gemäß einer vorteilhaften Weiterbildung des Eingriffselements der vorliegenden Erfindung ist das Eingriffselement an einer Außenseite eines Trägers der Kraftfahrzeugkarosserie flächig an dem Träger anliegend anbringbar.

Das Eingriffselement muss also nicht innerhalb des Trägers angeordnet werden, was eine Steifigkeit und Stabilität des Trägers schwächen könnte.

Gemäß einer Weiterbildung des flächig angebrachten Eingriffselements, kann dieses sowohl mit einer Außenseite einer horizontalen Wand als auch mit einer Außenseite einer vertikalen Wand des Trägers insbesondere durch Kleben verbindbar sein.

Durch das flächige Verbinden des Eingriffselements sowohl mit der horizontalen Wand als auch mit der vertikalen Wand des Trägers ist eine Krafteinleitung von unten in den Träger deutlich verbessert. Insbesondere durch das Anbringen des Eingriffselements an der horizontalen Wand kann der Träger über die Fahrzeughebevorrichtung von unten eingeleitete Kräfte besser aufnehmen. Mit anderen Worten können größere höhere Kräfte eingeleitet werden, ohne dass zusätzliche versteifende Maßnahmen an bzw. in dem Träger notwendig sind. Ferner stellt das flächige Anbringen des Eingriffselements nur an der Außenseite des Trägers keinen Eingriff in die Struktur des Trägers dar, so dass dessen Eigenschaften hinsichtlich Crashfestigkeit und Steifigkeit durch das Eingriffselement nicht nachteilig beeinflusst sind.

Der Ausdruck "horizontale Wand" bedeutet in dem Zusammenhang, dass es sich zumindest um eine Wand handelt, die in einem Winkel von kleiner 45°, bevorzugt kleiner 10° oder exakt 0°, gegenüber einer XY-Ebene der Kraftfahrzeugkarosserie, d.h. einer horizontalen Ebene, ausgebildet ist. Ferner bedeutet der Ausdruck "vertikale Wand", dass diese Wand zumindest in einem Winkel von kleiner 45°, bevorzugt kleiner 10° oder exakt 0°, gegenüber einer XZ-Ebene der Kraftfahrzeugkarossserie, d.h. einer vertikalen Ebene, ausgebildet ist.

In einer Weiterbildung gemäß der vorliegenden Erfindung ist das Eingriffselement stoffschlüssig mit der horizontalen Wand und mit der vertikalen Wand verbindbar. Insbesondere ist die stoffschlüssige Verbindung eine Klebeverbindung. Dabei ist die stoffschlüssige Verbindung bevorzugt großflächig über insbesondere den horizontalen Schenkel und den vertikalen Schenkel ausgebildet.

Eine Klebeverbindung ermöglicht eine möglichst großflächige Verbindung, die besonders vorteilhaft ein gleichmäßiges Einleiten von Kräften in die horizontale Wand und in die vertikale Wand ermöglicht. Weiterhin können durch eine Klebeverbindung die Eigenschaften hinsichtlich Crashfestigkeit und Steifigkeit des Trägers aufrechterhalten werden.

Bevorzugt ist das Eingriffselement aus Kunststoff, insbesondere faserverstärkten Kunststoff ausgebildet. Der faserverstärkte Kunststoff kann beispielsweise kohlefaserverstärkter Kunststoff sein.

Weiterhin ist bevorzugt der Träger der Kraftfahrzeugkarosserie aus Kunststoff, insbesondere faserverstärkten Kunststoff ausgebildet. Der faserverstärkte Kunststoff kann beispielsweise kohlefaserverstärkter Kunststoff sein.

Der Träger kann, insbesondere wenn der Träger aus Kunststoff ausgebildet ist, mit einem Füllmaterial, z.B. einem Schaummaterial oder einem Wabenmaterial, gefüllt sein.

Hierdurch ist eine Crashfestigkeit des Trägers erhöht, wobei das Schaummaterial oder Wabenmaterial gegenüber einem Vollmaterial leichter ist, was vorteilhaft für ein Gesamtgewicht der Kraftfahrzeugkarosserie ist. Das Füllmaterial bewirkt zudem, dass der Träger im Bereich des Eingriffselements stabiler ist und Kräfte, die von der Fahrzeughebeeinrichtung auf die Kraftfahrzeugkarosserie wirken, besser aufgenommen werden können.

Bevorzugt kann die Aufnahmeeinrichtung eine im Wesentlichen horizontale Fahrzeughebeanlagefläche aufweisen.

Eine horizontale Fahrzeughebeanlagefläche dient einem Eingriff einer herkömmlichen Fahrzeughebeeinrichtung zum Heben der Kraftfahrzeugkarosserie bzw. des Kraftfahrzeugs.

Das Eingriffselement kann auch als Fahrzeughebevorrichtungskontaktelement oder Anlageelement für eine Fahrzeughebevorrichtung bezeichnet werden.

Nachstehend erfolgt eine Kurzbeschreibung der Figuren.
- Fig. 1: ist eine schematische Perspektivansicht eines Eingriffselements und eines Eingriffswerkzeugs gemäß einem Ausführungsbeispiel der vorliegenden Erfindung.
- Fig. 2: ist eine weitere schematische Perspektivansicht des Eingriffselements und des Eingriffswerkzeugs gemäß dem Ausführungsbeispiel der vorliegenden Erfindung.
- Fig. 3: ist eine schematische Schnittansicht des Eingriffselements, des Eingriffswerkzeugs und eines Trägers einer Kraftfahrzeugkarosserie gemäß dem Ausführungsbeispiel der vorliegenden Erfindung.
- Fig. 4: ist eine schematische Schnittansicht des Eingriffselements und des Trägers der Kraftfahrzeugkarosserie gemäß dem Ausführungsbeispiel der vorliegenden Erfindung.
- Fig. 5: ist eine schematische Draufsicht des Eingriffselements und des Eingriffswerkzeugs gemäß dem Ausführungsbeispiel der vorliegenden Erfindung.
- Fig. 6: ist eine schematische, geschnittene Draufsicht des Eingriffselements und des Eingriffswerkzeugs gemäß dem Ausführungsbeispiel der vorliegenden Erfindung.

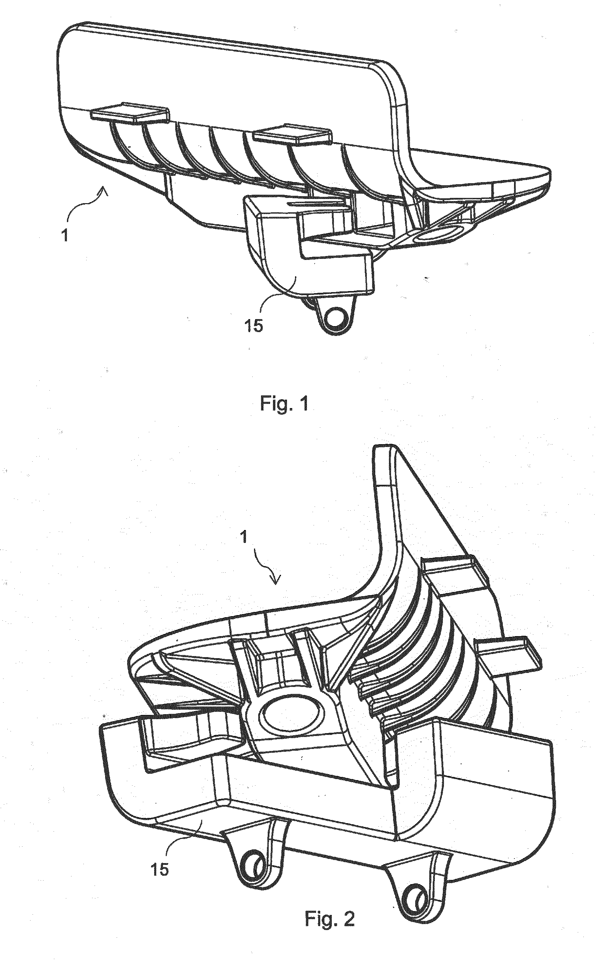

Nachstehend erfolgt eine Beschreibung eines Ausführungsbeispiels der vorliegenden Erfindung unter Bezugnahme auf die Figuren 1 bis 6.

Figuren 1 und 2 zeigen in unterschiedlichen perspektivischen Ansichten ein Eingriffselemerit 1 und ein Eingriffswerkzeug 15. Insbesondere ist das Eingriffswerkzeug 15 in einer Position gezeigt, in der das Eingriffswerkzeug 15 lediglich teilweise in Eingriff mit dem Eingriffselement 1 ist.

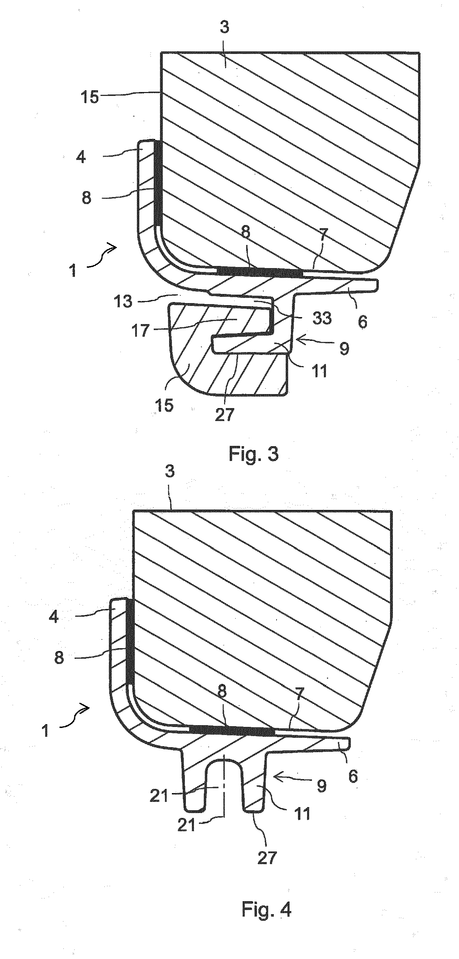

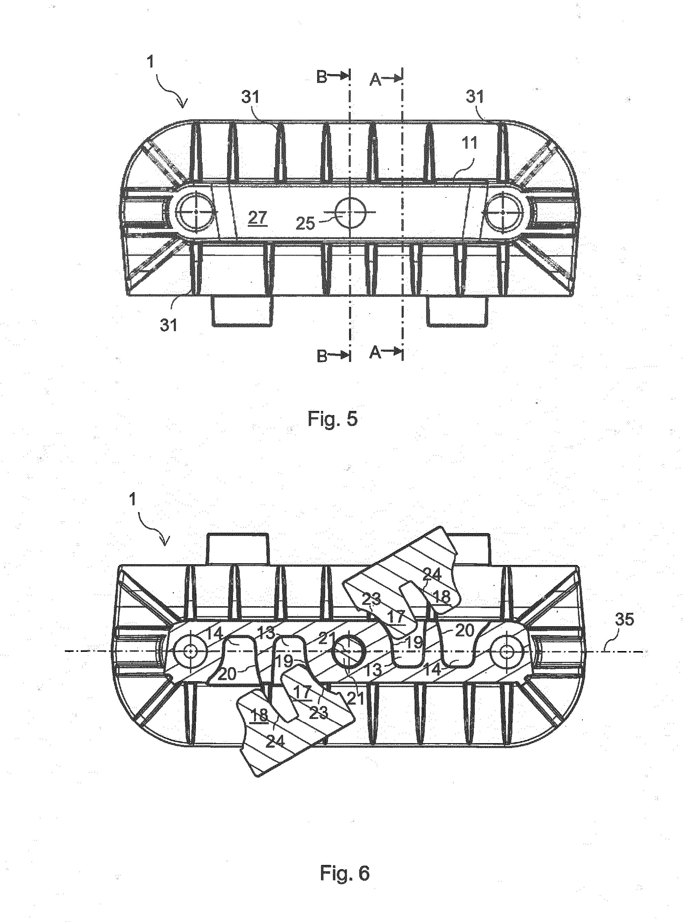

Figur 3 zeigt in einer Schnittansicht entlang einer Linie A-A in Figur 5 das Eingriffselement. 1, das an einen Träger 3 einer Kraftfahrzeugkarosserie geklebt ist. Das Eingriffselement 1 hat einen L-förmigen Querschnitt mit einem im Wesentlichen vertikalen Schenkel 4 und einem im Wesentlichen horizontalen Schenkel 6. Der vertikale Schenkel 4 ist an eine vertikale Wand 5 geklebt, während der horizontale Schenkel 6 an eine horizontale Wand 7 des Trägers 3 geklebt ist. Ein Übergang zwischen dem vertikalen Schenkel 4 und dem horizontalen Schenkel 6 ist abgerundet ausgebildet. Ein Klebemittel zwischen dem Eingriffselement 1 und dem Träger 3 ist in Figur 3 mit dem Bezugszeichen 8 versehen.

Der Träger 3 mit seiner vertikalen Wand 5 und seiner horizontalen Wand 7 ist ein seitlicher Längsträger der Kraftfahrzeugkarosserie, der zwischen einem vorderen Radhaus und einem hinteren Radhaus der Kraftfahrzeugkarosserie verläuft. Die horizontale Wand 5 befindet sich an einer Innenseite des seitlichen Längsträgers 3. Es ist jedoch auch möglich, dass die horizontale Wand 5 an der Außenseite des Längsträgers 3 verläuft. Der Längsträger 3 ist entgegen der Schraffur in der vereinfachten schematischen Darstellung in der Form eines Hohlträgers ausgebildet. Grundsätzlich ist es auch möglich das Eingriffselement 1 an einem Querträger anzubringen.

Der Längsträger 3 kann aus einem metallischen Werkstoff ausgebildet sein oder aus einem faserverstärkten Kunststoff ausgebildet sein. In letzterem Fall ist der Längsträger 3 bevorzugt mit einem geschäumten Material gefüllt, das dem Längsträger 3 eine erhöhte Crashfestigkeit bei geringem Gewicht verleiht. Ferner ist der Längsträger 3 durch das geschäumte Material hinsichtlich einer Krafteinleitung durch die Fahrzeughebeeinrichtung verbessert.

Das Eingriffselement 1 besteht aus einem faserverstärkten Kunststoff.

Das Eingriffselement 1 hat eine Aufnahmeeinrichtung 9 mit einem Aufnahmevorsprung 11, der mit dem horizontalen Schenkel 6 des Eingriffselements 1 integral, d.h. stoffschlüssig, verbunden ist. Das Eingriffselement 1 ist insbesondere als ein einteiliges Spritzgusselement ausgebildet.

Die Aufnahmeeinrichtung 9 dient zur Aufnahme des Eingriffswerkzeugs 15 der Fahrzeughebevorrichtung. Ferner weist der Aufnahmevorsprung 11 der Aufnahmeeinrichtung 9 eine Fahrzeughebeanlagefläche 27 auf, an der übliche Fahrzeughebevorrichtungen eingreifen können, um das Kraftfahrzeug bzw. die Kraftfahrzeugkarosserie, zu heben. Die Fahrzeughebeanlagefläche 27 ist im wesentlich horizontal, also parallel zur xy-Ebene der Kraftfahrzeugkarosserie, ausgebildet.

Wie in Figur 3 gezeigt ist, weist der Aufnahmevorsprung 11 zumindest eine Eingriffsöffnung 13 auf, mit der ein Eingriffsvorsprung 17 des Eingriffswerkzeugs 15 in Eingriff bringbar ist. Es handelt sich dabei um einen derartigen formschlüssigen Eingriff, so dass von dem Eingriffswerkzeug 15 in alle Richtungen Kräfte auf das Eingriffselement 1 und damit auf den Längsträger 3 bzw. die gesamte Kraftfahrzeugkarosserie ausgeübt werden können.

Figur 4 ist eine schematische Schnittansicht entlang der Linie B - B in Figur 5 durch das Eingriffselement 1 und den Längsträger 3. Im Gegensatz zu Figur 3 ist in Figur 4 kein Eingriffswerkzeug gezeigt. Der Schnitt B - B verläuft genau durch eine Drehachse 21 des nicht gezeigten Eingriffswerkzeugs 15. Mit der Drehachse 21 des Eingriffswerkzeugs fluchtend ist eine Zentrieröffnung 25 in Form eines Kreiskegelstumpfes in dem Aufnahmevorsprung 11 vorgesehen, wie in Figur 4 zu sehen ist.

Figur 5 zeigt eine untere Draufsicht auf das Eingriffselement 1. Insbesondere ist der Aufnahmevorsprung 11 zu sehen, in dem die Zentrieröffnung 25 ausgebildet ist. Von dem Aufnahmevorsprung 11 verlaufen Verstärkungsrippen 31 zu dem horizontalen Schenkel 6 des Eingriffselements 1. Die Verstärkungsrippen 31 sind rings um den Aufnahmevorsprung 11 angeordnet. Wie in Figur 5 ferner zu sehen ist, hat der Aufnahmevorsprung 11 eine Fahrzeughebekontaktfläche 27, die sich im Wesentlichen über den gesamten Aufnahmevorsprung 11 erstreckt.

In Figur 6 ist eine Figur 5 entsprechende untere Draufsicht des Eingriffselements 1, wobei eine Schnittansicht des Aufnahmevorsprungs 11 und Teile des Eingriffswerkzeugs 15 gezeigt sind. Insbesondere weist der Aufnahmevorsprung 11 auf gegenüberliegenden Seiten jeweils Eingriffsöffnungen 13 und 14 auf. Die Eingriffsöffnungspaare 13 und 14 sind zueinander rotationssymmetrisch im Bezug auf die Drehachse 21 des Eingriffswerkzeugs bzw. die Zentrieröffnung 25 angeordnet. Die Eingriffsöffnungen 13 und 14 haben im Bezug auf die Drehachse 21 innere Flanken 19 und 20, die zumindest teilweise kreiszylinderförmig ausgebildet sind und deren Kreiszylinderachse jeweils durch die Drehachse 21 verläuft. Die kreiszylinderförmigen Flanken 19 und 20 verlaufen bis zur Mitte 35 des Aufnahmevorsprungs 11.

Wie weiterhin zu sehen ist, hat das Eingriffswerkzeug 15 Eingriffsvorsprünge 17 und 18, die komplementär zu den Eingriffsöffnungen 13 und 14 ausgebildet sind. Das Eingriffswerkzeug hat demnach zwei Eingriffsvorsprungpaare 17, 18. Die Eingriffsvorsprünge 17 und 18 haben ebenso zum Teil kreiszylinderförmig ausgebildete Flanken 23 und 24, deren Kreiszylinderachse jeweils durch die Drehachse 21 verläuft. Die kreiszylinderförmigen Flanken 23 und 24 verlaufen im Falle eines vollständigen Eingriffs bis zur Mitte 35 des Aufnahmevorsprungs 11.

Die Eingriffsvorsprünge 17 und 18 sind insbesondere derart ausgebildet, dass bei einem vollständigen Eingriff der Eingriffsvorsprünge 17, 18 in den Eingriffsöffnungen 13 und 14 die Öffnungen in der horizontalen Ebene im Wesentlichen vollständig ausfüllen. Wie in Figur 3 gezeigt ist, kann jedoch in vertikaler Richtung ein Spalt 33 ausgebildet sein.

Nachstehend ist ein Verfahren beschrieben, bei dem das Eingriffswerkzeug 15 mit dem Eingriffselement 1 eingreift.

Zunächst wird das Eingriffswerkzeug 15 in einer um ca. 90° gegenüber dem vollständigen Eingriff versetzten Stellung an dem Eingriffselement 1, d.h. dem Aufnahmevorsprung 11, angesetzt, wobei der Zentriervorsprung des Eingriffswerkzeugs 15 in die Zentrieröffnung 25 eingeführt wird. Dann wird das Eingriffswerkzeug 25 (in Figur 6 im Uhrzeigersinn) um ungefähr 90° gedreht, bis das Eingriffswerkzeug 15 am Anschlag ist, d.h. die Eingriffsvorsprünge 17, 18 vollständig in die Eingriffsöffnungen 19, 20 eingreifen. Hierbei kann zusätzlich eine Verrastung vorgesehen sein, die das Eingriffswerkzeug 15 in der Position des vollständigen Eingriffs hält.

Ist das Eingriffswerkzeug 15 vollständig in Eingriff und verrastet, kann die Kraftfahrzeugkarosserie bzw. das Kraftfahrzeug über das Eingriffswerkzeug 15 in alle Richtungen bewegt werden. Insbesondere kann die Kraftfahrzeugkarosserie bzw. das Kraftfahrzeug nach oben gehoben werden, nach unten gezogen werden oder könnte auch in beliebig andere Richtungen bewegt werden. Dies ist besonders vorteilhaft bei einer Fertigung des Kraftfahrzeugs, während jener das Kraftfahrzeug bzw. die Kraftfahrzeugkarosserie in unterschiedliche Lagen verschoben, verdreht bzw. bewegt werden muss, um eine bessere Montierbarkeit von Teilen an der Kraftfahrzeugkarosserie zu ermöglichen. Außerdem kann das Kraftfahrzeug gegen eine Federkraft der Radaufhängungen nach unten gezogen werden.

Des Weiteren kann das Kraftfahrzeug über die Anlagefläche 27 jederzeit über eine herkömmliche Fahrzeughebevorrichtung angehoben werden.

Durch die L-förmige Ausbildung des Eingriffselements können insbesondere beim Heben des Kraftfahrzeugs Kräfte des Eingriffselements 1 besonderes gut in die horizontale Wand 8 des Längsträgers 3 eingeleitet und verteilt werden, so dass keine weitere Verstärkung des Längsträgers notwendig ist.

## Patentansprüche

1. System aufweisend ein Eingriffselement für eine Kraftfahrzeugkarosserie und eine Fahrzeughebevorrichtung, wobei das Eingriffselement (1) an einem Träger (3) der Kraftfahrzeugkarosserie anbringbar ist und das Eingriffselement (1) eine Aufnahmeeinrichtung (9) mit einem Aufnahmevorsprung (11) mit zumindest zwei horizontalen Eingriffsöffnungen (13, 14) aufweist, durch die mittels einer formschlüssigen Verbindung in vertikaler Richtung Druckkräfte und Zugkräfte von der Fahrzeughebevorrichtung auf die Kraftfahrzeugkarosserie übertragbar sind, wobei die zwei horizontalen Eingriffsöffnungen (13, 14) entgegengesetzt zueinander angeordnet sind, **dadurch gekennzeichnet, dass**
die Eingriffsöffnungen (13) für einen drehenden Eingriff eines Eingriffswerkzeugs (15), das entsprechende Eingriffsvorsprünge (17, 18) aufweist, der Fahrzeughebevorrichtung angepasst sind.

2. System nach Patentanspruch 1, wobei Flanken (19, 20) der Eingriffsöffnungen (13, 14) in Abschnitten kreiszylinderförmig ausgebildet sind, deren Kreiszylinderachse mit einer Drehachse (21) des Eingriffswerkzeugs (15), deren Eingriffsvorsprünge (17, 18) entsprechende Flanken (23, 24) aufweisen, übereinstimmt.

3. System nach Patentanspruch 1 oder 2, wobei der Aufnahmevorsprung (11) auf jeder Seite zwei Eingriffsöffnungen (13, 14) aufweist.

4. System nach einem der Patentansprüche 1 bis 3, wobei der Aufnahmevorsprung (11) eine vertikale Zentrieröffnung (25) aufweist, in die ein Zentriervorsprung des Eingriffswerkzeuges (15) eingreifbar ist, wobei der Zentriervorsprung als Drehachse des Eingriffswerkzeugs (15) dient.

5. System nach einem der Patentansprüche 1 bis 4, wobei das Eingriffselement (1) an einer Außenseite des Trägers (3) der Kraftfahrzeugkarosserie flächig an dem Träger (3) anliegend anbringbar ist.

6. System nach Patentanspruch 5, wobei das Eingriffselement (1) sowohl mit einer Außenseite einer horizontalen Wand (7) als auch mit einer Außenseite einer vertikalen Wand (5) des Trägers (3) insbesondere durch Kleben verbindbar ist.

7. System nach einem der Patentansprüche 1 bis 6, wobei das Eingriffselement (1) aus Kunststoff, insbesondere faserverstärktem Kunststoff, ausgebildet ist.

8. System nach einem der Patentansprüche 1 bis 7, wobei die Aufnahmeeinrichtung (9) eine im Wesentlichen horizontale Fahrzeughebeanlagefläche (27) aufweist.

9. Eingriffselement, das für ein System nach einem der Patentansprüche 1 bis 8 geeignet ist.

10. Kraftfahrzeugkarosserie mit einem Eingriffselement nach Patentanspruch 9, das an einem Träger (3) der Kraftfahrzeugkarosserie angebracht ist.

11. Kraftfahrzeugkarosserie nach Patentanspruch 10, wobei der Träger (3) aus Kunststoff, insbesondere faserverstärktem Kunststoff, ausgebildet ist.

## Claims

1. System having an engagement element for a motor vehicle body and a vehicle jacking apparatus, wherein the engagement element (1) can be attached to a support (3) of the motor vehicle body, and the engagement element (1) has a receiving device (9) having a receiving projection (11) with at least two horizontal engagement openings (13, 14) through which compressive forces and tensile forces can be transmitted from the vehicle jacking apparatus to the motor vehicle body by means of form-fitting connection in the vertical direction, wherein the two horizontal engagement openings (13, 14) are arranged opposite each other, **characterized in that** the engagement openings (13) for rotating the engagement of an engagement tool (15) which has corresponding engagement projections (17, 18) are attached to the vehicle jacking apparatus.

2. System according to Patent Claim 1, wherein flanks (19, 20) of the engagement openings (13, 14) are circular-cylindrical in portions, the circular-cylinder axis of which corresponds to an axis of rotation (21) of the engagement tool (15) and the engagement projections (17, 18) of which have corresponding flanks (23, 24).

3. System according to Patent Claim 1 or 2, wherein the receiving projection (11) has two engagement openings (13, 14) on each side.

4. System according to one of Patent Claims 1 to 3, wherein the receiving projection (11) has a vertical centring opening (25) in which a centring projection of the engagement tool (15) is engageable, wherein the centring projection serves as the axis of rotation of the engagement tool (15).

5. System according to one of Patent Claims 1 to 4, wherein the engagement element (1) can be attached to an outer side of the support (3) of the motor vehicle body in a manner lying flat against the support (3).

6. System according to Patent Claim 5, wherein the engagement element (1) can be connected both to an outer side of a horizontal wall (7) and to an outer side of a vertical wall (5) of the support (3), in particular by adhesive bonding.

7. System according to one of Patent Claims 1 to 6, wherein the engagement element (1) is formed from plastic, in particular fibre-reinforced plastic.

8. System according to one of Patent Claims 1 to 7, wherein the receiving device (9) has a substantially horizontal vehicle jacking contact surface (27).

9. Engagement element which is suitable for a system according to one of Patent Claims 1 to 8.

10. Motor vehicle body having an engagement element according to Patent Claim 9 which is attached to a support (3) of the motor vehicle body.

11. Motor vehicle body according to Patent Claim 10, wherein the support (3) is formed from plastic, in particular fibre-reinforced plastic.

## Revendications

1. Système présentant un élément d'engagement pour une carrosserie de véhicule automobile et un dispositif de levage de véhicule, l'élément d'engagement (1) pouvant être monté sur un support (3) de la carrosserie de véhicule automobile et l'élément d'engagement (1) présentant un dispositif de réception (9) avec une saillie de réception (11) avec au moins deux ouvertures d'engagement horizontales (13, 14), par le biais desquelles des forces de pression et des forces de traction peuvent être transmises dans la direction verticale du dispositif de levage de véhicule à la carrosserie de véhicule automobile au moyen d'une liaison par engagement par correspondance de formes, les deux ouvertures d'engagement horizontales (13, 14) étant disposées à l'opposé l'une de l'autre,
**caractérisé en ce que**
les ouvertures d'engagement (13) sont adaptées au dispositif de levage de véhicule pour l'engagement rotatif d'un outil d'engagement (15) qui présente des saillies d'engagement correspondantes (17, 18) .

2. Système selon la revendication 1, dans lequel des flancs (19, 20) des ouvertures d'engagement (13, 14) sont réalisés sous forme cylindrique circulaire dans des portions dont l'axe de cylindre circulaire coïncide avec un axe de rotation (21) de l'outil d'engagement (15), dont les saillies d'engagement (17, 18) présentent des flancs correspondants (23, 24).

3. Système selon la revendication 1 ou 2, dans lequel la saillie de réception (11) présente de chaque côté deux ouvertures d'engagement (13, 14).

4. Système selon l'une quelconque des revendications 1 à 3, dans lequel la saillie de réception (11) présente une ouverture de centrage verticale (25) dans laquelle peut être engagée une saillie de centrage de l'outil d'engagement (15), la saillie de centrage servant d'axe de rotation de l'outil d'engagement (15).

5. Système selon l'une quelconque des revendications 1 à 4, dans lequel l'élément d'engagement (1) peut être monté en s'appliquant au niveau d'un côté extérieur du support (3) de la carrosserie de véhicule automobile à plat contre le support (3).

6. Système selon la revendication 5, dans lequel l'élément d'engagement (1) peut être connecté à la fois à un côté extérieur d'une paroi horizontale (7) ainsi qu'à un côté extérieur d'une paroi verticale (5) du support (3), notamment par collage.

7. Système selon l'une quelconque des revendications 1 à 6, dans lequel l'élément d'engagement (1) est réalisé en plastique, en particulier en plastique renforcé par des fibres.

8. Système selon l'une quelconque des revendications 1 à 7, dans lequel le dispositif de réception (9) présente une surface d'installation de levage de véhicule (27) essentiellement horizontale.

9. Élément d'engagement approprié pour un système selon l'une quelconque des revendications 1 à 8.

10. Carrosserie de véhicule automobile comprenant un élément d'engagement selon la revendication 9, qui est monté sur un support (3) de la carrosserie de véhicule automobile.

11. Carrosserie de véhicule automobile selon la revendication 10, dans laquelle le support (3) est réalisé en plastique, en particulier en plastique renforcé par des fibres.
